# EUROPÄISCHE PATENTSCHRIFT

(11) **EP 2 104 840 B1**
(45) Veröffentlichungstag und Bekanntmachung des Hinweises auf die Patenterteilung: **15.07.2015**
(21) Anmeldenummer: 07819605.2
(22) Anmeldetag: 06.11.2007
(51) Int. Cl.: G01G 23/00, G01G 23/10

(54) **ELEKTRONISCHE WAAGE MIT LIBELLE**
ELECTRONIC SCALES COMPRISING A BUBBLE LEVEL
BALANCE ELECTRONIQUE A NIVEAU A BULLE

(30) Priorität: 15.12.2006 DE 102006059260
(43) Veröffentlichungstag der Anmeldung: 30.09.2009
(73) Patentinhaber: Sartorius Lab Instruments GmbH & Co. KG, 37075 Göttingen (DE)
(72) Erfinder: FREYDANK, Gerd, 37081 Göttingen (DE); GRAF, Winfried, 37127 Niemetal (DE); OLDENDORF, Christian, 37077 Göttingen (DE)
(86) Internationale Anmeldenummer: PCT/EP2007/009585
(87) Internationale Veröffentlichungsnummer: WO 2008/071267

(56) Entgegenhaltungen:
- EP-A- 1 541 978
- DE-A1- 3 234 372
- US-A- 3 322 222

## Beschreibung

Die Erfindung bezieht sich auf eine elektronische Waage mit einem Messwertaufnehmer, mit einer digitalen Signalverarbeitungseinheit, mit einer Digitalanzeige, mit einer Libelle, die aus einem Behälter besteht, der unter Bildung einer Gasblase teilweise mit Flüssigkeit gefüllt ist, und mit Schaltungsmitteln oder mit Programmteilen in der digitalen Signalverarbeitungseinheit zur Detektion der Auslenkung der Gasblase.

Waagen dieser Art sind allgemein bekannt und z. B. in der DE 32 34 372 C2 beschrieben. Das elektrische Signal der Libelle dient dabei dazu, die Fehler der Waage bei Schrägstellung aufgrund des Cosinus-Effektes digital zu korrigieren. Dadurch muss die Waage nicht mehr mittels Stellfüßen in die exakte horizontale Lage gebracht werden.

Diese Waagen haben sich in der Praxis jedoch nicht durchgesetzt, da der Aufwand für die Libelle in Relation zum Nutzen zu groß erschien.

Aufgabe der Erfindung ist es daher, eine Waage der eingangs genannten Art so weiterzubilden, dass die Libelle einen zusätzlichen Nutzen für die Signalverarbeitung der Waage liefert.

Erfindungsgemäß wird dies dadurch erreicht, dass zusätzlich Schaltungsmittel oder Programmteile zur Detektion des Durchmessers der Gasblase vorhanden sind.

Die Gasblase einer Libelle wandert nicht nur bei Schrägstellung aus, sondern sie verändert zusätzlich in Abhängigkeit von der einwirkenden Fallbeschleunigung ihren Durchmesser. Bei großer Fallbeschleunigung wird die Gasblase dünn und hat einen größeren Durchmesser, bei geringerer Fallbeschleunigung verändert sich die Gasblase aufgrund der Oberflächenspannung mehr in Richtung Kugelgestalt, ihr Durchmesser ist kleiner. Bei Änderungen der Fallbeschleunigung - also bei vertikalen Erschütterungen - ändert sich also synchron der Durchmesser der Gasblase. Aus der Änderung des Durchmessersignals kann auf die Größe und die Phasenlage der Erschütterungen geschlossen werden. Dadurch kann die digitale Signalverarbeitungseinheit zum einen aus dem Signal für die Auslenkung die bekannte Korrektur der Schrägstellungseintlüsse auf das Wägeergebnis durchführen und zum anderen aufgrund des Durchmessersignals eine Korrektur der Erschütterungseinflüsse. ;

Wird die Lage der Gasblase z. B. optisch durch zwei lichtempfindliche Elemente - z.B. Fotodioden - am Rand der Gasblase abgetastet, so ergibt die Differenz der Signale der beiden lichtempfindlichen Elemente die Auslenkung. Vorteilhafterweise wird dann der Durchmesser der Gasblase durch die Summe der Signale der beiden lichtempfindlichen Elemente ermittelt. Dadurch sind keine gesonderten Abtastsensoren für den Durchmesser notwendig, vielmehr reicht eine andere Auswertung der Signale der vorhandenen Sensoren. - Das gleiche gilt, wenn die Lage der Gasblase elektrisch abgetastet wird.

Die Erfindung wird im Folgenden anhand der schematischen Zeichnungen erläutert. Dabei zeigt:
- Figur 1: das Schnittbild der wesentlichen Teile einer Waage mit einer Libelle mit optischer Lageabtastung,
- Figur 2: die Anordnung der lichtempfindlichen Elemente der Libelle aus Figur 1,
- Figur 3: die Form der Gasblase der Libelle aus Figur 1 bei geringer Fallbeschleunigung,
- Figur 4: die Form der Gasblase der Libelle aus Figur 1 bei größerer Fallbeschleunigung,
- Figur 5: eine graphische Darstellung der Korrektur von Störungen und
- Figur 6: eine mögliche Schaltung zur analogen Messung der Auslenkung und des Durchmessers der Gasblase.

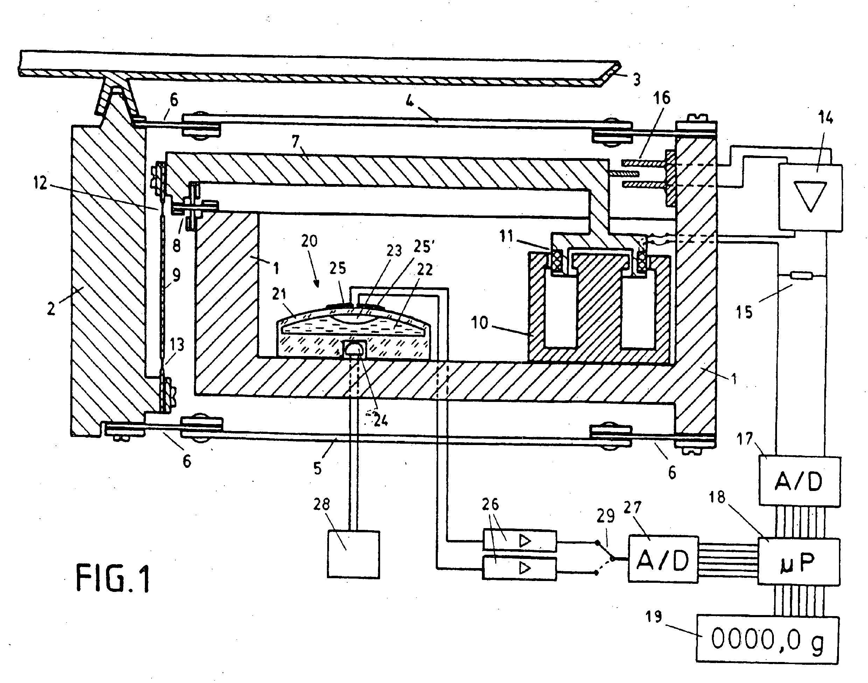

Die elektronische Waage in Figur 1 besteht aus einem gehäusefesten Stützteil 1, an dem über zwei Lenker 4 und 5 mit den Gelenkstellen 6 ein Lastaufnehmer 2 in senkrechter Richtung beweglich befestigt ist. Der Lastaufnehmer trägt in seinem oberen Teil die Lastschale 3 zur Aufnahme des Wägegutes und überträgt die der Masse des Wägegutes entsprechende Kraft über ein Koppelelement 9 mit den Dünnstellen 12 und 13 auf den kürzeren Hebelarm eines Übersetzungshebels 7. Der Übersetzungshebel 7 ist durch ein Kreuzfedergelenk 8 am Stützteil 1 gelagert. Am längeren Hebelarm des Übersetzungshebels 7 greift die Kompensationskraft an, die durch eine stromdurchflossene Spule 11 im Luftspalt eines Permaneotmagnetsystems 10 erzeugt wird. Die Größe des Kompensationsstromes wird in bekannter Weise durch einen Lagensensoren 16 und einen Regelverstärker 14 so geregelt, dass Gleichgewicht zwischen dem Gewicht des Wägegutes und der elektromagnetischen Kompensationskraft herrscht. Der Kompensationsstrom erzeugt an einem Messwiderstand 15 eine Messspannung, die einem Analog / Digital-Wandler 17 zugeführt wird. Das digitalisierte Ergebnis wird von einer digitalen Signalverarbeitungseinheit 18 übernommen und in der Anzeige 19 digital angezeigt.

Waagen dieser Art sind in ihrem Aufbau und ihrer Funktion allgemein bekannt, so dass sie im Vorstehenden nur ganz kurz und knapp erläutert wurden.

Weiter ist eine elektrische Libelle 20 in die Waage eingebaut. Sie besteht aus einem durchsichtigen Behälter 21, der teilweise mit einer Flüssigkeit 22 gefüllt ist, so dass sich eine Gasblase 23 an der höchsten Stelle des Behälters 21 bildet. Wegen der Krümmung der oberen Begrenzungsfläche des Behälters 21 ist die Lage dieser Gasblase 23 abhängig von der Schrägstellung der Waage; in der Figur ist diese Krümmung übertrieben stark gezeichnet. Unterhalb des Behälters 21 ist mittig eine Leuchtdiode 24 angeordnet, die ihre emittierte Strahlung senkrecht nach oben durch die untere Behälterwand, die Flüssigkeit 22, die Gasblase 23 und die obere Behälterwand sendet. Dort wird die nicht absorbierte Strahlung von zwei lichtempfindlichen Elementen - z. B. zwei Fotodioden - 25 und 25' registriert. Die Flüssigkeit 22 ist nun so ausgewählt bzw. so angefärbt, dass sie die Strahlung der Leuchtdiode teilweise absorbiert, sodass die an den lichtempfindlichen Elementen 25 und 25' ankommende Strahlungsmenge stark von der durchstrahlten Flüssigkeitsdicke - und damit von der Lage der Gasblase 23 - abhängt. Die Leuchtdiode 24 wird von einer Stromversorgungseinheit 28 mit einem konstanten Strom versorgt. Das Ausgangssignal der lichtempfindlichen Elemente 25 und 25' wird in zwei Verstärkern 26 verstärkt und über einen Multiplexer 29 einem Analog / Digital-Wandler 27 zugeführt und dort digitalisiert. Die digitale Signalverarbeitungseinheit 18 kann dann aus der Differenz der Signale und der bekannten Kennlinie der Libelle die Schrägstellung der Waage berechnen und den Messwert des Wägesystems, der vom Analog/Digital-Wandler 17 geliefert wird, entsprechend korrigieren.

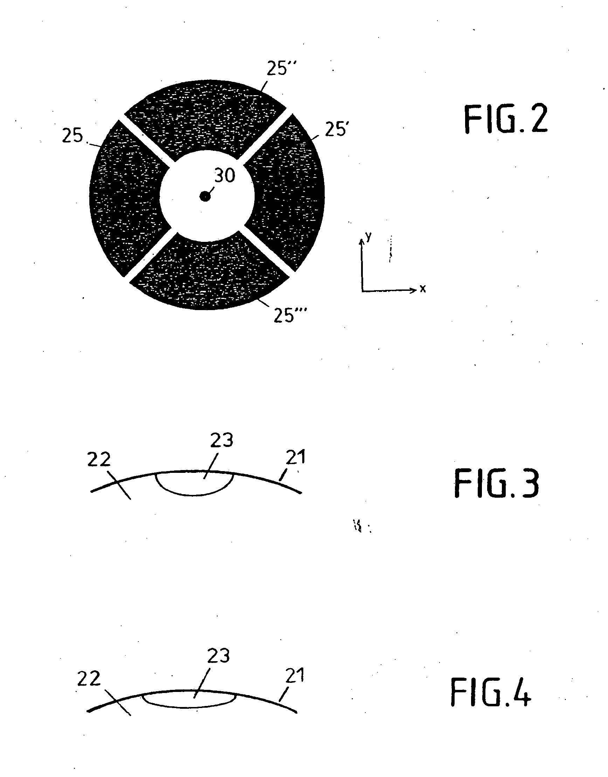

In Figur 1 ist aus Gründen der Übersichtlichkeit nur die Abtastung der Schrägstellung der Waage in einer Richtung gezeigt. Für die Abtastung in beiden Richtungen wird vorteilhafterweise eine runde Libelle - meist als Dosenlibelle bezeichnet - benutzt, die vier lichtempfindliche Elemente 25, 25', 25" und 25"' aufweist, deren Form und Anordnung in Figur 2 dargestellt ist. Die lichtempfindlichen Elemente 25 und 25' ergeben mit ihrem Differenzsignal die Schrägstellung in x-Richtung, die lichtempfindlichen Elemente 25" und 25"' entsprechend in y-Richtung. Den lichtempfindlichen Elementen 25" und 25"' ist ebenfalls je ein Verstärker nachgeschaltet und der Multiplexer 29 weist zwei zusätzliche Eingänge auf (nicht gezeichnet).

Der Einfluss der Fallbeschleunigung auf die Form der Gasblase ist in den Figuren 3 und 4 gezeigt. Bei geringer Fallbeschleunigung überwiegt der Einfluss der Oberflächenspannung und die Form der Gasblase nähert sich einer Kugel, wie es in Figur 3 gezeigt ist. Bei hoher Fallbeschleunigung ist der Einfluss der Fallbeschleunigung größer und drückt die Gasblase in eine flachere Form, wie es in Figur 4 gezeigt ist. Bei einer vertikalen Erschütterung der Waage wechseln höhere und niedrigere Fallbeschleunigungen im Takt der Erschütterung ab. Dementsprechend wechselt der Durchmesser der Gasblase im Takt der Erschütterung. Die digitale Signalverarbeitungseinheit 18 kann den Durchmesser dabei aus dem Summensignal der beiden lichtempfindlichen Elemente 25 und 25' und / oder dem Summensignal der beiden lichtempfindlichen Elemente 25" und 25"' errechnen. - Voraussetzung dafür ist natürlich, dass der Multiplexer 29 und der Analog/Digital-Wandler 27 so schnell sind, dass sie Größe und Phasenlage der Erschütterung richtig wiedergeben können. Da die hauptsächlichen Erschütterungen im Frequenzbereich von ca. 0,1 Hz bis 10 Hz liegen, ist dies jedoch kein Problem. Erschütterungen mit höheren Frequenzen von z. B. über 50 Hz lassen sich gut durch übliche digitale Filter unterdrücken, so dass in diesem Frequenzbereich keine Notwendigkeit für eine zusätzliche Unterdrückung von Störsignalen besteht.

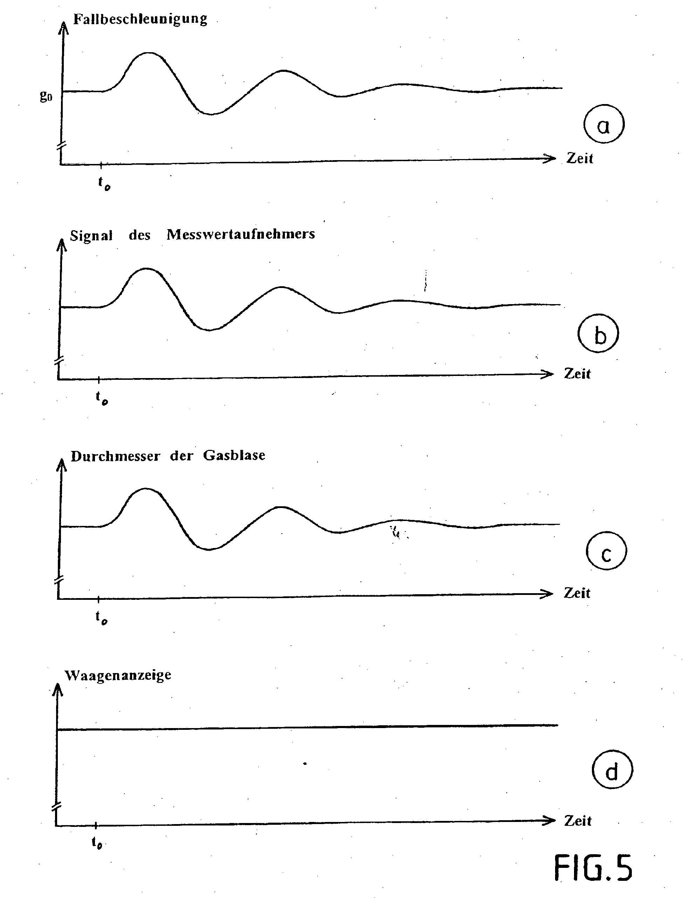

In Figur 5 ist beispielhaft die Korrektur einer zum Zeitpunkt t₀ einsetzenden Störung gezeigt. Im Teilbild a ist die Störung gezeigt, wie sie von außen auf die Waage einwirkt: die normale Fallbeschleunigung g₀ wird ab dem Zeitpunkt t₀ von einer Störbeschleunigung überlagert, die mit einer erhöhten Fallbeschleunigung beginnt und nach einigen Perioden relativ schnell abklingt. Diese Störung wirkt sich proportional im Signal des Messwertaufnehmers auf, wie es zum Beispiel am Messwiderstand 15 abgegriffen werden kann und wie es im Teilbild b dargestellt ist. Die Störbeschleunigung wirkt sich in gleicher Weise auf den Durchmesser der Gasblase aus, wie es im Teilbild c dargestellt ist. Die digitale Signalverarbeitungseinheit 18 kann dann durch entsprechende Korrekturalgorithmen das Signal des Messwertaufnehmers korrigieren, sodass sich die Störung in der Waagenanzeige 19 nicht bzw. stark verringert auswirkt (Teilbild d).

Diese Korrekturalgorithmen kann jeder Fachmann leicht entwerfen und dabei zum Beispiel auch berücksichtigen, dass bei größerer Last auf der Waagschale 3 auch eine größere Korrektur notwendig ist.

Im Vorstehenden ist davon ausgegangen worden, dass das momentane Durchmessersignal von der Libelle 20 direkt zur Korrektur des momentanen Signals des Messwertaufnehmers benutzt wird. Dies setzt natürlich voraus, dass das Frequenz- und Phasenverhalten des Durchmessersignals im Frequenzbereich der Korrektur mit dem Frequenz- und Phasenverhalten des Messwertaufnehmers übereinstimmt. Diese Übereinstimmung kann z. B. durch die richtige Wahl der Viskosität der Flüssigkeit 22 der Libelle erreicht werden, aber auch durch eine analoge oder digitale Filterung des Durchmessersignals. Genauso kann auch das Signal des Messwertaufnehmers in bekannter Weise gefiltert werden, ehe die beschriebene Erschütterungskorrektur durchgeführt wird.

Alternativ sind jedoch auch einfachere Korrekturstrategien möglich: z. B. kann die digitale Signalverarbeitungseinheit 18 einfach die mittlere Amplitude der Änderungen des Durchmessersignals - und damit also die mittlere Amplitude der Störbeschleunigung - bestimmen und aufgrund dieses Signals mindestens eine Filterstufe in der Filterung des Signals des Messwertaufnehmers verändern: Bei kleinen Störbeschleunigungen wird das Signal des Messwertaufnehmers nur wenig gefiltert, bei großen Störbeschleunigungen wird die Filterzeitkonstante erhöht und so trotz der schlechteren Aufstellbedingungen eine stabile Anzeige erreicht.

In einer anderen vorteilhaften Ausgestaltung wird nur die Frequenz der Änderung des Durchmessersignals bestimmt. Dann wird z. B. durch Veränderung der Abtastfrequenz des Analog- / Digital-Wandlers 17 dafür gesorgt, dass die Abtastfrequenz ein Vielfaches der Störfrequenz ist, um so diese Störfrequenz besonders wirkungsvoll zu unterdrücken. Dasselbe ist natürlich auch durch eine entsprechende Anpassung der digitalen Filterung in der digitalen Signalverarbeitungseinheit 18 möglich. Diese Alternative ist natürlich besonders dann vorteilhaft, wenn die Störbeschleunigungen nicht kurzfristiger Art sind - wie in Figur 5 angenommen - , sondern längerfristig auf die Waage einwirken. Ein Beispiel dafür sind Gebäudeschwingungen aufgrund von schlecht ausgewuchteten rotierenden Maschinen.

Die bisher beschriebenen Varianten der Erschütterungskorrektur basieren alle auf einer Korrektur des Signals vom Messwertaufnehmer in der digitalen Signalverarbeitungseinheit 18. Es ist jedoch auch möglich, z. B. in den Füßen der Waage Aktoren vorzusehen, die die von der Libelle gemessene Schrägstellung und die von der Libelle gemessenen Erschütterungen mechanisch korrigieren. Für die Schrägstellung der Waage ist dies bekannt und z. B. mit motorisch verstellbaren Stellfüßen realisiert. In gleicher Weise ist dies auch für die Störbeschleunigungen möglich, wenn man Aktoren benutzt, die eine Verstellung im geforderten Frequenzbereich ermöglichen. Z. B. Piezo-Aktoren sind dafür geeignet. Diese Aktoren werden dann z. B. in einem Regelkreis so angesteuert, dass das Erschütterungssignal an der Libelle auf (nahezu) null geregelt wird.

Die Erfindung wurde im Vorstehenden am Beispiel einer Waage mit optischer Durchlicht-Libelle beschrieben. Es sind jedoch auch andere Ausgestaltungen der Libelle möglich: z. B. kann die Leuchtdiode auf derselben Seite der Libelle wie die lichtempfindlichen Elemente 25...25'" angeordnet sein. Die lichtempfindlichen Elemente fangen dann das reflektierte Licht auf, das sich ebenfalls in Abhängigkeit von der Lage der Gasblase ändert. Die Leuchtdiode würde dann z. B. an dem in Figur 2 mit 30 bezeichneten Ort angeordnet sein.

Statt der optischen Abtastung der Lage der Gasblase ist auch eine elektrische Abtastung möglich: ist der Behälter 21 auf seiner Innenseite mit einer mittigen Elektrode und einer in vier Elektroden-Segmente unterteilten Ringelektrode - wie in Figur 2 dargestellt - versehen, so ändert sich bei einer Lageänderung der Gasblase der Ohmsche Widerstand zwischen der mittigen Elektrode und den einzelnen Elektroden-Segmenten. Hierzu muss die Flüssigkeit in der Libelle nur einen geeigneten spezifischen Widerstand aufweisen. - Auch eine kapazitive Auswertung ist möglich: Aufgrund der Dielektrizitätskonstanten der Flüssigkeit 22 ändert sich die Kapazität zwischen den Elektroden bei einer Änderung der Lage der Gasblase.

Im Vorstehenden sind für die zweidimensionale Abtastung der Auslenkung der Gasblase 23 immer vier lichtempfindliche Elemente 25...25"' bzw. vier Elektroden-Segmente vorgesehen. Dies ist für die Erläuterung am einfachsten, da die Auslenkung in x-Richtung und in y-Richtung (gemäß Fig. 2) direkt aus der Differenz der Signale der gegenüberliegenden lichtempfindlichen Elemente bzw. der Elektroden-Segmente erhalten wird. Mit geringfügig höherem mathematischem Aufwand ist es jedoch möglich, aus drei lichtempfindlichen Elementen bzw. drei Elektroden-Segmenten, die z. B. in den Ecken eines gleichseitigen Dreiecks angeordnet sind, die Auslenkung in x- und y-Richtung zu bestimmen.

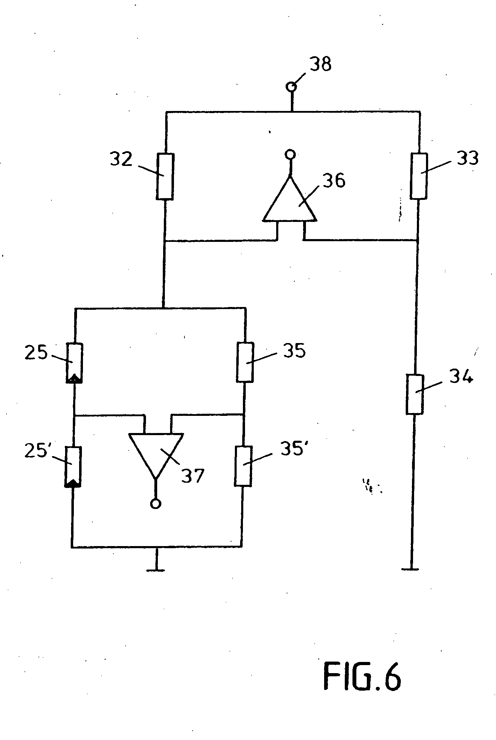

Für die Auswertung der Signale der Libelle ist in Figur 1 die Digitalisierung des Signals jedes lichtempfindlichen Elementes 25...25'" in einem Analog / Digital-Wandler 27 vorgesehen. Es sind jedoch auch Schaltungen möglich, die analogelektrisch das Differenzsignal und das Summensignal zur Verfügung stellen. Eine solche Schaltung ist in Figur 6 dargestellt - aus Gründen der Übersichtlichkeit nur für eine Richtung. Die beiden lichtempfindlichen Elemente 25 und 25' (als Fotodioden gezeichnet) sind zusammen mit den beiden gleich großen Widerständen 35 und 35' zu einer ersten Wheatstoneschen Brücke verschaltet. Am Ausgang des Brückenverstärkers 37 kann dann das Differenzsignal abgegriffen werden. Die gesamte erste Brücke bildet wiederum zusammen mit den drei weiteren Brückenwiderständen 32, 33 und 34 eine zweite Wheatstonesche Brücke, an deren Brückendiagonalen über den Verstärker 36 das Summensignal abgegriffen werden kann. Am Anschluss 38 wird die Versorgungsspannung für die Wheatstoneschen Brücken angelegt. - Ändern sich die Signal der lichtempfindlichen Elemente 25 und 25' gegensinnig, so ändert sich der Abgleich der zweiten Wheatstoneschen Brücke nicht, die zweite Wheatstonesche Brücke wird also vom Differenzsignal der lichtempfindlichen Elemente 25 und 25' nicht beeinflusst. In entsprechender Weise hat eine gleichsinnige Änderung der Signale der lichtempfindlichen Elemente 25 und 25' keinen Einfluss auf das Ausgangssignal des Verstärkers 37. Die Ausgänge der Verstärker 36 und 37 liefern also jeweils nur das Summensignal bzw. das Differenzsignal.

### Bezugszeichenliste:

- 1: gehäusefestes Stützteil
- 2: Lastaufnehmer
- 3: Lastschale
- 4: Lenker
- 5: Lenker
- 6: Gelenkstellen
- 7: Übersetzungshebel
- 8: Kreuzfedergelenk
- 9: Koppelelement
- 10: Permanentmagnetsystem
- 11: Spule
- 12: Dünnstelle
- 13: Dünnstelle
- 14: Regelverstärker
- 15: Messwiderstand
- 16: Lagensensor
- 17: Analog/Digital-Wandler
- 18: digitale Signalverarbeitungseinheit
- 19: Anzeige
- 20: Neigungsmesser
- 21: durchsichtiger Behälter
- 22: Flüssigkeit
- 23: Gasblase
- 24: Leuchtdiode
- 25, 25': lichtempfindliche Elemente
- 25'', 25''': lichtempfindliche Elemente
- 26: Verstärker
- 27: Analog/Digital-Wandler
- 28: Stromversorgungseinheit
- 29: Multiplexer
- 30: Ort der Leuchtdiode / Ort der mittigen Elektrode
- 32: Brückenwiderstand
- 33: Brückenwiderstand
- 34: Brückenwiderstand
- 35, 35': Widerstände
- 36: Brückenverstärker
- 37: Brückenverstärker
- 38: Anschluss für die Versorgungsspannung

## Patentansprüche

1. Elektronische Waage mit einem Messwertaufnehmer (1...16), mit einer digitalen Signalverarbeitungseinheit (18), mit einer Digitalanzeige (19), mit einer Libelle (20), die aus einem Behälter (21) besteht, der unter Bildung einer Gasblase (23) teilweise mit Flüssigkeit (22) gefüllt ist, und mit Schaltungsmitteln oder mit Programmteilen in der digitalen Signalverarbeitungseinheit (18) zur Detektion der Auslenkung der Gasblase (23), **dadurch gekennzeichnet, dass** zusätzlich Schaltungsmittel (32...36) oder Programmteile zur Detektion des Durchmessers der Gasblase (23) vorhanden sind.

2. Elektronische Waage nach Anspruch 1, **dadurch gekennzeichnet, dass** die Detektion der Auslenkung und die Detektion des Durchmessers der Gasblase (23) durch dieselben optischen Hilfsmittel (24, 25...25"') erfolgt.

3. Elektronische Waage nach Anspruch 2, **dadurch gekennzeichnet, dass** die optischen Hilfsmittel aus einer mittig angeordneten Leuchtdiode (24) als Lichtquelle und mindestens drei lichtempfindlichen Elementen (25, 25', 25", 25"') bestehen, wobei die lichtempfindlichen Elemente als Kreissegmente um die in der Mittelachse angeordnete Leuchtdiode herum angeordnet sind.

4. Elektronische Waage nach Anspruch 3, **dadurch gekennzeichnet, dass** aus dem Differenzsignal von je zwei gegenüberliegenden lichtempfindlichen Elementen (25, 25'; 25", 25'") die Auslenkung der Gasblase (23) abgeleitet wird und dass aus dem Summensignal von mindestens zwei lichtempfindlichen Elementen (25, 25', 25", 25"') die Änderung des Durchmessers der Gasblase (23) abgeleitet wird.

5. Elektronische Waage nach Anspruch 1, **dadurch gekennzeichnet, dass** die Detektion der Auslenkung und die Detektion des Durchmessers der Gasblase (23) durch dieselben elektrischen Hilfsmittel erfolgt.

6. Elektronische Waage nach Anspruch 5, **dadurch gekennzeichnet, dass** die elektrischen Hilfsmittel aus einer zentralen Mittelelektrode und einer in mindestens drei Elektroden-Segmente unterteilten Ringelektrode bestehen.

7. Elektronische Waage nach Anspruch 6, **dadurch gekennzeichnet, dass** aus dem Differenzsignal von je zwei gegenüberliegenden Elektroden-Segmenten die Auslenkung der Gasblase (23) abgeleitet wird und dass aus dem Summensignal von mindestens zwei Elektroden-Segmente die Änderung des Durchmessers der Gasblase (23) abgeleitet wird.

8. Elektronische Waage nach einem der Ansprüche 4 oder 7, **dadurch gekennzeichnet, dass** die Einzelsignale der lichtempfindlichen Elemente (25, 25', 25", 25"') oder der Elektroden-Segmente einem Analog / Digital-Wandler (27) zugeführt werden und dass in der digitalen Signalverarbeitungseinheit (18) Programmteile zur digitalen Bildung der Differenz und der Summe dieser Einzelsignale vorhanden sind.

9. Verfahren zum Betrieb einer elektronische Waage nach Anspruch 1, **dadurch gekennzeichnet, dass** das Durchmessersignal zur Korrektur des Einflusses von Erschütterungen auf die Anzeige der Waage benutzt wird.

10. Verfahren nach Anspruch 9, **dadurch gekennzeichnet, dass** das Signal des Messwertaufnehmers (1...16) in Abhängigkeit vom Durchmessersignal digital in der digitalen Signalverarbeitungseinheit (18) korrigiert wird.

11. Verfahren nach Anspruch 9, **dadurch gekennzeichnet, dass** das Durchmessersignal zur Ansteuerung von Aktoren, die in den Füßen der elektronischen Waage angeordnet sind, benutzt wird und dass die Aktoren den auf die Waage einwirkenden Erschütterungen entgegenwirken.

12. Verfahren nach Anspruch 9, **dadurch gekennzeichnet, dass** in Abhängigkeit von der Amplitude der Schwankungen des Durchmessersignals die Zeitkonstante mindestens eines der in der digitalen Signalverarbeitungseinheit (18) vorhandenen Filter verändert wird.

13. Verfahren nach Anspruch 9, **dadurch gekennzeichnet, dass** in Abhängigkeit von der Frequenz der Schwankungen des Durchmessersignals die Abtastfrequenz des dem Messwertaufnehmer (1...16) nachgeschalteten Analog/Digital-Wandlers (17) verändert wird.

## Claims

1. Electronic weighing machine comprising a measurement value pick-up (1 to 16), a digital signal processing unit (18), a digital display (19), a spirit level (20), which consists of a container (21) partly filled with liquid (22) under formation of a gas bubble (23), and switching means or program parts in the digital signal processing unit (18) for detecting deflection of the gas bubble (23), **characterised in that** additional switching means (32 to 36) or program parts for detection of the diameter of the gas bubble (23) are present.

2. Electronic weighing machine according to claim 1, **characterised in that** detection of the deflection and detection of the diameter of the gas bubble (23) are carried out by the same optical device (24, 25 to 25"').

3. Electronic weighing machine according to claim 2, **characterised in that** the optical device consists of a centrally arranged light-emitting diode (24) as light source and at least three light-sensitive elements (25, 25', 25", 25"'), wherein the light-sensitive elements are arranged as segments of a circle around the light-emitting diode arranged in the centre axis.

4. Electronic weighing machine according to claim 3, **characterised in that** the deflection of the gas bubble (23) is derived from the difference signal of a respective two mutually opposite light-sensitive elements (25, 25', 25", 25'") and that the change in diameter of the gas bubble (23) is derived from the summation signal of at least two light-sensitive elements (25, 25', 25", 25'").

5. Electronic weighing machine according to claim 1, **characterised in that** the detection of the deflection and detection of the diameter of the gas bubble (23) are carried out by the same electrical device.

6. Electronic weighing machine according to claim 5, **characterised in that** the electrical device consists of a central middle electrode and a ring electrode divided into at least three electrode segments.

7. Electronic weighing machine according to claim 6, **characterised in that** the deflection of the gas bubble (23) is derived from the difference signal of a respective two mutually opposite electrode segments and that the change in diameter of the gas bubble (23) is derived from the summation signal of at least two electrode segments.

8. Electronic weighing machine according to one of claims 4 and 7, **characterised in that** the individual signals of the light-sensitive elements (25, 25', 25", 25"') of the electrode segments are supplied to an analog-to-digital converter (27) and that program parts are present in the digital signal processing unit (18) for digital formation of the difference and sum of these individual signals.

9. Method of operating an electronic weighing machine according to claim 1, **characterised in that** the diameter signal is used for correction of the influence of vibrations on the display of the weighing machine.

10. Method according to claim 9, **characterised in that** the signal of the measurement value pick-up (1 to 16) is digitally corrected in the digital signal processing unit (18) in dependence on the diameter signal.

11. Method according to claim 9, **characterised in that** the diameter signal is used for activating actuators arranged in the feet of the electronic weighing machine and that the actuators counteract vibrations acting on the weighing machine.

12. Method according to claim 9, **characterised in that** the time constant of at least one of the filters present in the digital signal processing unit (18) is varied in dependence on the amplitude of the fluctuations of the diameter signal.

13. Method according to claim 9, **characterised in that** the scanning frequency of the digital-to-analog converter (17) downstream of the measurement value pick-up (1 to 16) is varied in dependence on the frequency of the fluctuations of the diameter signal.

## Revendications

1. Balance électronique avec un transducteur (1....16), avec une unité de traitement de signal numérique (18), avec un affichage numérique (19), avec un niveau (20), qui est constitué d'un récipient (21), qui est partiellement rempli avec un liquide (22), provoquant la formation d'une bulle de gaz (23), et avec des moyens de commutation ou avec des parties de programme dans l'unité de traitement de signal numérique (18) pour la détection de l'inclinaison de la bulle de gaz (23), **caractérisée en ce que** des moyens de commutation supplémentaires (32....36) ou des parties de programme sont présents pour la détection du diamètre de la bulle de gaz (23).

2. Balance électronique selon la revendication 1, **caractérisée en ce que** la détection de l'inclinaison et la détection du diamètre de la bulle de gaz (23) sont effectuées par les mêmes moyens optiques auxiliaires (24, 25...25"').

3. Balance électronique selon la revendication 2, **caractérisée en ce que** les moyens optiques auxiliaires sont constitués d'une diode électroluminescente (24), disposée au centre en tant que source de lumière, et d'au moins trois éléments photosensibles (25, 25', 25", 25"'), où les éléments photosensibles sont disposés autour de la diode électroluminescente agencée sur l'axe central sous forme de segments circulaires.

4. Balance électronique selon la revendication 3, **caractérisée en ce que** l'inclinaison de la bulle de gaz (23) est déduite à partir de la différence des signaux de deux éléments photosensibles (25, 25' ; 25", 25"') situés respectivement l'un en face de l'autre, et que la variation du diamètre de la bulle de gaz (23) est déduite à partir de la somme des signaux d'au moins deux éléments photosensibles (25, 25' ; 25", 25"').

5. Balance électronique selon la revendication 1, **caractérisée en ce que** la détection de l'inclinaison et la détection du diamètre de la bulle de gaz (23) sont effectuées par les mêmes moyens auxiliaires électriques.

6. Balance électronique selon la revendication 5, **caractérisée en ce que** les moyens auxiliaires électriques sont constitués par une électrode centrale au milieu et une électrode annulaire subdivisée en au moins trois segments d'électrode.

7. Balance électronique selon la revendication 6, **caractérisée en ce que** l'inclinaison de la bulle de gaz (23) est déduite à partir de la différence des signaux de deux segments d'électrode situés respectivement l'un en face de l'autre et que la variation du diamètre de la bulle de gaz (23) est déduite à partir de la somme des signaux d'au moins deux segments d'électrode.

8. Balance électronique selon l'une des revendications 4 ou 7, **caractérisée en ce que** les signaux individuels des éléments photosensibles (25, 25', 25", 25"') ou des segments d'électrode sont envoyés à un convertisseur analogique/numérique et que des parties de programme sont présentes dans l'unité de traitement de signal numérique (18) pour la formation numérique de la différence et de la somme de ces signaux individuels.

9. Procédé de fonctionnement d'une balance électronique selon la revendication 1, **caractérisé en ce que** le signal du diamètre est utilisé pour la correction de l'influence de secousses sur l'affichage de la balance.

10. Procédé selon la revendication 9, **caractérisé en ce que** le signal du transducteur (1...16) est corrigé de manière numérique dans l'unité de traitement de signal numérique (18) en fonction du signal du diamètre.

11. Procédé selon la revendication 9, **caractérisé en ce que** le signal du diamètre est utilisé pour la mise en marche d'actionneurs, qui sont disposés dans les pieds de la balance électronique, et que les actionneurs contrebalancent les secousses agissant sur la balance.

12. Procédé selon la revendication 9, **caractérisé en ce que** la constante de temps d'au moins un filtre présent dans l'unité de traitement de signal numérique (18) est modifiée en fonction de l'amplitude des oscillations du signal de diamètre.

13. Procédé selon la revendication 9, **caractérisé en ce que** la fréquence d'échantillonnage du convertisseur analogique/numérique (17) dans le circuit après le transducteur (1.........16) est modifiée en fonction de la fréquence des oscillations du signal de diamètre.
